# EUROPÄISCHE PATENTANMELDUNG

(11) **EP 4 782 149 A1**
(43) Veröffentlichungstag der Anmeldung: **29.07.2026**
(21) Anmeldenummer: 25153908.6
(22) Anmeldetag: 24.01.2025
(51) Int. Cl.: B25B 1/24, B23Q 3/06, B25B 5/16, B23Q 3/18

(54) **SPANNSYSTEM**

(71) Anmelder: Hainbuch GmbH Spannende Technik, 71672 Marbach (DE)
(72) Erfinder: HILLINGER, Alfred, 71711 Murr (DE); FEINAUER, Achim, 73033 Göppingen (DE); DUJMOVIC, Melissa, 71573 Allmersbach im Tal (DE)
(74) Vertreter: Witte, Weller und Partner Patentanwälte mbB Stuttgart

(57) **Zusammenfassung**

Bekannt sind Spannsysteme (10) zum Einspannen von Werkstücken, die über eine Mehrzahl von Spannbacken (30) verfügen, vorzugsweise mindestens über drei Spannbacken (30), die gegeneinander und gegenüber einer Basis (20) des Spannsystems radial verlagerbar sind.

Die Spannbacken (30) verfügen jeweils übereine Grundbacke (40), die gegenüberder Basis (20) verlagerbar ist, sowie über eine auf der Grundbacke (40) aufgesetzte und automatisiert wechselbare Aufsatzbacke (60), an deren Außenseite ein Spannbereich (70) zur Anlage an einem zu spannenden Werkstück vorgesehen ist.

Um einen automatisierten Wechselprozess bei hoher Betriebssicherheit zu gewährleisten, wird vorgeschlagen, dass die Grundbacke (40) einen Tragsockel (50) zum Aufsetzen der Aufsatzbacke (60) aufweist, wobei die Aufsatzbacke (60) den Tragsockel (50) umfänglich umgibt.

Um zu erkennen, falls Verunreinigungen oder Späne verhindern, dass die Aufsatzbacke ihre Sollposition einnehmen kann, wird vorgeschlagen, ein pneumatisches Prüfsystem (90) vorzusehen, um die korrekte Anlage der Aufsatzbacke (60) an der Grundbacke (40) zu prüfen. Ein solches pneumatisches Prüfsystem (90) weist einen Druckkanal (92) in der Grundbacke (40) auf, der im Zuge des Aufsetzens der Aufsatzbacke (60) mit einem Überdruck oder Unterdruck beaufschlagbar ist und der endseitig bei korrekter Anlage durch eine Schließfläche (68) der Aufsatzbacke (60) verschlossen ist.

## Beschreibung

### ANWENDUNGSGEBIET UND STAND DER TECHNIK

Die Erfindung betrifft den Bereich der Spannsysteme mit Spannbacken, insbesondere den Bereich von Spannsystemen zum Einspannen von Werkstücken.

Solche Spannsysteme sind beispielsweise in Form von 3- oder 4-Backenfuttern bekannt, können jedoch auch mit nur zwei Spannbacken ausgestattet sein. Die Spannbacken sind gegenüber einer Basis und gegeneinander verlagerbar, um ein Werkstück sicher einzuspannen. Insbesondere können die Spannbacken radial in Richtung einer gemeinsamen Mittelachse verlagerbar sein.

Bei einem gattungsgemäßen Spannsystem verfügen die Spannbacken jeweils über eine Grundbacke, die gegenüber der Basis verlagerbar ist, sowie über eine auf der Grundbacke aufgesetzte und wechselbare Aufsatzbacke. An deren Außenseite befindet sich ein Spannbereich, der an einem zu spannenden Werkstück anliegt. Insbesondere können die Spannbereiche der Spannbacken hin zu der gemeinsamen Mittelachse ausgerichtet sein, um ein Werkstück von außen zu spannen. Grundsätzlich ist aber auch eine Anordnung möglich, bei der die Spannbereiche nach außen weisen, um ein Werkstück von innen zu spannen.

Backensysteme aus Grundbacke und Aufsatzbacke sind allgemein bekannt. Sie bieten mehrere Vorteile. Das Spannsystem kann in einfacher Weise auf unterschiedliche Werkstückgeometrien umgerüstet werden, da nur die Aufsatzbacken, nicht jedoch die Grundbacken ausgetauscht werden müssen. Auch ein schneller Wechsel bei Verschleiß wird möglich.

Allerdings weisen bekannte Systeme mit Grund- und Aufsatzbacken auch Nachteile auf, insbesondere bei der automatisierten Anbringung der Aufsatzbacke. Der Kopplungsablauf bekannter Aufsatzbacken ist komplex und schwer durch Roboter zu realisieren, da neben der Relativbewegung zwischen Aufsatz- und Grundbacke häufig zusätzliche Verriegelungsmittel, wie Befestigungsschrauben, gehandhabt werden müssen. Darüber hinaus besteht die Gefahr, dass Späne in den Kontaktbereich zwischen Grundbacke und Aufsatzbacke eindringen. Bleibt dies unbemerkt, so kann die Aufsatzbacke ihre Sollposition relativ zur Grundbacke nicht einnehmen. Dies führt dazu, dass auch die Spannposition des Werkstücks von der vorgesehenen Position abweicht und die Qualität der Bearbeitung des Werkstücks entsprechend sinkt.

### AUFGABE UND LÖSUNG

Aufgabe der Erfindung ist es, ein Spannsystem mit Grundbacken und hierauf aufsetzbaren und wechselbaren Aufsatzbacken derart zu gestalten, dass ein automatisierter Wechsel erleichtert wird und Störungen des Betriebes durch Verschmutzungen reduziert werden.

Erfindungsgemäß wird hierfür ein Spannsystem vorgeschlagen, welches vorzugsweise hinsichtlich zweier nachfolgend beschriebener Erfindungsaspekte in besonderer Weise ausgestaltet ist, wobei die zwei Erfindungsaspekte auch unabhängig voneinander realisiert sein können, vorzugsweise jedoch gemeinsam an einem Spannsystem umgesetzt sind.

Das Spannsystem dient dem Einspannen von Werkstücken, vorzugsweise zum Zwecke der spanenden Bearbeitung bei rotierendem Werkstück. Das Spannsystem verfügt über eine Mehrzahl von Spannbacken, die gegeneinander und gegenüber einer Basis des Spannsystems verlagerbar sind und somit in eine Spannposition gebracht werden können, in der sie das Werkstück sicher an der Basis, insbesondere einer Spindelbasis, hält.

Vorzugsweise weist das Spannsystem mindestens drei Spannbacken auf, die in Richtung einer gemeinsamen Mittelachse radial verlagerbarsind, aber auch zwei Spannbacken können für bestimmte Anwendungszwecke ausreichen. Vorzugsweise weist das Spannsystem weiterhin ein gemeinsames Betätigungsglied auf, welches durch Verlagerung die Grundbacken in einer Axialrichtung gemeinsam verlagert und hierdurch mittelbar radial gegeneinander verlagert. Insbesondere kann die Kraftübertragung vom gemeinsamen Betätigungsglied auf die Grundbacken mittels eines Keilgetriebes erfolgen.

Die Spannbacken verfügen jeweils über eine Grundbacke, die gegenüber der Basis verlagerbar ist. Auf die Grundbacken ist jeweils eine Aufsatzbacke aufsetzbar, an deren Außenseite ein Spannbereich zur unmittelbaren Anlage an dem zu spannenden Werkstück vorgesehen ist. Die Spannbereiche der Aufsatzbacken können innenseitig und/oder außenseitig vorgesehen sein, je nachdem ob das Werkstück von innen oder außen gespannt werden soll. Im Spannbereich kann die Außenseite der Aufsatzbacke mit einer hierfür angepassten Oberflächengestaltung oder Oberflächengeometrie vorgesehen sein, um das Werkstück sicher halten zu können.

Erfindungsgemäß ist die Gestaltung von Grundbacke und Aufsatzbacke dahingehend gestaltet, dass das Aufsetzen und Entfernen der Aufsatzbacken automatisiert durch einen Zuführungsmechanismus oder einen Roboter erfolgen kann, um einen automatisierten Wechsel während des Betriebes zu ermöglichen. Eine schnelle und sichere Wechselmöglichkeit erhöht die Flexibilität bei der Verwendung des Spannsystems.

Gemäß dem ersten Erfindungsaspekt ist vorgesehen, dass die Grundbacke einen Tragsockel aufweist, der sich exponiert von einem Grundkörper der Grundbacke in Richtung der Aufsatzbacke erstreckt. Der Tragsockel kann einstückig mit dem Grundkörper gestaltet sein oder hiermit fest verbunden sein.

Der Tragsockel dient der Ankopplung der Aufsatzbacke. Die Aufsatzbacke weist korrespondierend zum Tragsockel an ihrer der Grundbacke zugewandten Seite eine Ausnehmung auf, die umfänglich von einer Schürze der Aufsatzbacke umgeben ist. Im angekoppelten Zustand erstreckt sich der Tragsockel in die Ausnehmung hinein und füllt die Ausnehmung weitgehend aus. Die Konturen des Tragsockels und der Ausnehmung können in nachfolgend noch beschriebener Weise gestaltet sein, um einen sicheren Halt der Aufsatzbacke zu ermöglichen.

Die die Ausnehmung umgebende Schürze erstreckt sich in Richtung der Grundbacke und verringert so die Gefahr, dass Späne und Verunreinigungen in den unmittelbaren Anlagebereich von Tragsockel und Ausnehmung gelangen können.

Vorzugsweise sind die umlaufende Schürze und die Grundbacke derart aufeinander abgestimmt, dass im gekoppelten Zustand der Tragsockel vollständig von der Umgebung und dem Werkstück getrennt ist. Die Schürze erstreckt sich vorzugsweise umlaufend bis zur Gru ndbacke und zur Basis des Spannsystems, so dass zwischen Schürze und den den Tragsockel umgebenden Bereichen der Grundbacke oder der Basis nur maximal ein schmaler Spalt verbleibt. Vorzugswiese erstreckt sich die Schürze auf allen Seiten der Ausnehmung in etwa gleich weit in Richtung der Grundbacke.

Insbesondere kann eine vorzugsweise elastische Dichtung vorgesehen sein, die bei auf der Grundbacke aufgesetzter Aufsatzbacke einen Spalt zwischen der Schürze und der Grundbacke oder der Basis des Spannsystems vollständig schließt. Die Dichtung kann an der Schürze der Aufsatzbacke oder an der Grundbacke vorgesehen sein.

Vorzugsweise ist die umlaufende Dichtungjedoch an der Basis vorgesehen. Sie ist in diesem Falle so bemessen, dass der Tragsockel relativ zur umlaufenden Dichtung linear verlagerbar bleibt und die hierauf aufgesetzte Aufsatzbacke ungeachtet der Relativstellung zwischen Basis und Spannbacke stets in Anlage mit der Dichtung verbleibt.

Vorzugsweise ist vorgesehen, dass der Tragsockel und die Aufsatzbacke zusammenwirkende Haltekonturen aufweisen, die einerTrennungentgegenwirken. Insbesondere kann vorgesehen sein, dass die Aufsatzbacke eine Haltekontur an der Innenseite der Schürze aufweist, durch die sie eine Haltekontur des Tragsockels hintergreift. Die Haltekonturen können insbesondere derart ausgebildet sein, dass sie in einer Radialrelativstellung von Grundbacke und Aufsatzbacke ein lineares Aufschieben der Aufsatzbacke in Axialrichtung gestatten und ausgehend von einer solchen Relativstellung radial gegeneinander verlagerbar sind, um in eine hinterschneidende Relativstellung und somit in den verriegelten Zustand zu gelangen.

Vorzugsweise sind die Grundbacke und die Aufsatzbacke derart aufeinander angepasst, dass sie allein durch eine Relativbewegung der Aufsatzbacke relativ zur Grundbacke miteinander gekoppelt und voneinander gelöst werden können. Auf ein zusätzliches Befestigungsmittel wie eine Befestigungsschraube oder dergleichen, welches im Zuge der Kopplungzusätzlich zur Zuführbewegung der Aufsatzbacke aktiv verlagert werden muss, wird vorzugsweise verzichtet.

Insbesondere von Vorteil ist es, wenn die Grundbacke und die Aufsatzbacke durch reine Linearbewegungen miteinander koppelbar und voneinander lösbar sind, vorzugsweise durch zwei aufeinanderfolgende lineare Relativbewegungen. Insbesondere vorzugsweise sind die Grundbacke und die Aufsatzbacke derart aufeinander abgestimmt, dass im Zuge des Koppelns die Aufsatzbacke auf den Tragsockel in Axialrichtung aufgeschoben und nachfolgend radial verlagert werden kann, um einen Formschluss herzustellen, der einer axialen Trennung der Aufsatzbacke von Tragsockel entgegenwirkt. Die Anordnungen an ein Zuführungsgerät, welches in der Lage ist, die Aufsatzbacken zu tauschen, werden hierdurch verringert.

Wenngleich vorzugsweise auf ein aktiv zu verlagerndes zusätzliches Befestigungsmittel verzichtet wird, kann die Grundbacke über ein relativ zum Tragsockel verlagerbares Halteelement verfügen, mittels dessen die Aufsatzbacke an der Grundbacke gesichert wird, insbesondere klemmend gesichert wird. Vorzugsweise handelt es sich bei dem Halteelement um ein mittels einer Federeinrichtung in eine Endlage gedrücktes Haltemittel, mittels dessen die Aufsatzbacke gegenüber dem Tragsockel verspannt wird. Das Haltemittel kann insbesondere in Form eines federbelasteten Stifts ausgebildet sein.

Das Halteelement ist vorzugsweise beweglich im Tragsockel vorgesehen und ragt an einer Seite aus dem Tragsockel heraus, vorzugsweise im Bereich einer seitlichen Mantelfläche des Tragsockels. Mittels der genannten Federeinrichtung wird das Halteelement vorzugsweise in eine exponierte Stellung gedrückt.

Vorzugsweise ist vorgesehen, dass das Halteelement durch das Aufsetzen der Aufsatzbacke auf den Tragsockel aus der exponierten Stellung zurückgedrückt wird. Insbesondere kann vorgesehen sein, dass an einer Innenseite der Aufsatzbacke eine Anlaufschräge vorgesehen ist, mittels derer das Halteelement beim Aufsetzen der Aufsatzbacke gegen die Kraft der Federeinrichtung ausgelenkt wird.

Die beschriebene Gestaltung mit Tragsockel an der Grundbacke und umgebender Schürze der Aufsatzbacke ist geeignet, das Eindringen von Verschmutzungen und Spänen in den unmittelbaren Kontaktbereich von Tragsockel und Ausnehmung der Aufsatzbacke zu unterbinden. Dies ist in Hinblick auf die beschriebene Automatisierung von Bedeutung, da ein automatisierter Prozess möglichst ohne manuelle Reinigung der Grundbacke und der Aufsatzbacke funktionieren sollte.

Der zweite Erfindungsaspekt betrifft die Erkennung, ob die Aufsatzbacke beim Koppeln ihre Sollposition erreicht hat. Dieser zweite Erfindungsaspekt ergänzt den ersten Erfindungsaspekt insofern, als dass während des Wechsels ein Eindringen von Spänen und Verunreinigungen nur schwer zu 100% auszuschließen ist, auch bei einer Gestaltung mit einer Schürze, wie sie oben beschrieben ist. Der nachfolgend vorgestellte Erfindungsaspekt ermöglicht, einen solchen Fall zu erkennen und passende Maßnahmen zu ergreifen.

Es wird vorgeschlagen, dass das Spannsystem über ein pneumatisches Prüfsystem verfügt, um die korrekte Anlage der Aufsatzbacke an der Grundbacke zu prüfen. Dieses pneumatische Prüfsystem verfügt über einen Druckkanal in der Grundbacke, der im Zuge des Aufsetzens der Aufsatzbacke mit einem Überdruck oder Unterdruck beaufschlagbar ist und der endseitig bei korrekter Anlage durch eine Schließfläche der Aufsatzbacke verschlossen ist.

Es ist demnach vorgesehen, dass die Schließfläche der Aufsatzbacke, die vorzugsweise an einer Innenseite der oben beschriebenen Ausnehmung vorgesehen ist, im gekoppelten Zustand an einem Auslass des Druckkanals anliegt und diesen verschließt. Dies gestattet es, nach dem Ankoppeln der Aufsatzbacke einen Überdruck im Druckkanal zu erzeugen und durch Messung zu erkennen, ob sich die Schließfläche in ihre Sollposition befindet. Insbesondere kann dies erfolgen, indem der sich einstellende Druck ermittelt wird oder indem ein Volumenstrom in den Druckkanal erfasst wird. Stellt sich nicht der erwartete Staudruck ein bzw. stellt sich ein Volumenstrom oberhalb eines akzeptablen Grenzwerts ein, so ist dies ein Indikator dafür, dass Verschmutzungen oder Späne den korrekten Sitz der Aufsatzbacke verhindern und das Problem muss vor der Fortsetzung der Bearbeitung beseitigt werden.

Die Schließfläche der Aufsatzbacke und der Spannbereich der Aufsatzbacke sind vorzugsweise in zueinander entgegengesetzter Richtung ausgerichtet. Hierdurch ist gewährleistet, dass die den Druckkanal verschließende Anlage der Aufsatzbacke an der Grundbacke mit der korrekten Positionierung des Spannbereichs einhergeht. Insbesondere vorzugsweise sind der Spannbereich sowie das offene Ende des Druckkanals bezogen auf das Spannsystem radial nach innen weisend ausgerichtet.

Wie bereits erläutert, wird es als vorteilhaft angesehen, wenn an der Grundbacke und insbesondere am Tragsockel der Grundbacke ein bewegliches Halteelement vorgesehen ist, insbesondere in Form eines federbelasteten Haltestifts. Das Haltemittel wirkt auf eine Haltefläche der Aufsatzbacke, die hierdurch in eine definierte Endlage gedrückt wird. Vorzugsweise ist vorgesehen, dass die Schließfläche der Aufsatzbacke und die Haltefläche der Aufsatzbacke in zueinander entgegengesetzter Richtung ausgerichtet sind. Das vorzugsweise federbelastete Haltemittel drückt daher mittelbar die Schließfläche der Aufsatzbacke gegen das offene Ende des Druckkanals.

Die beschriebenen Gestaltungen der Grundbacke mit Tragsockel und mit einem Druckkanal zum Zwecke der pneumatisches Lagekontrolle der Aufsatzbacke sind vorzugsweise gemeinsam realisiert. Der Druckkanal ist in einem solchen Falle vorzugsweise abschnittsweise im Tragsockel selbst vorgesehen. Insbesondere kann der Druckkanal an einer seitlichen Mantelfläche des Tragsockels münden.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt ein erfindungsgemäßes Spannsystems in Form eines exemplarischen Dreibackenfutters in Gesamtdarstellung.
Fig. 2 zeigt das Spannsystem in geschnittener Darstellung.
Fig. 3 zeigt eine einzelne Spannbacke des Spannsystems bei von einer Grundbacke abgenommener Aufsatzbacke.
Fig. 4A und 4B zeigen die Aufsatzbacke in verschiedenen Perspektiven.
Fig. 5 zeigt den Kopplungsbereich von Grundbacke und Aufsatzbacke im geschnittenen Zustand.
Fig. 6A bis 6E zeigen das Ankoppeln der Aufsatzbacke auf die Grundbacke.
Fig. 7 zeigt der Verlagerung der Spannbacke zum Zwecke des Spannens und Entspannens.

### DETAILLIERTE BESCHREIBUNG DER AUSFÜHRUNGSBEISPIELE

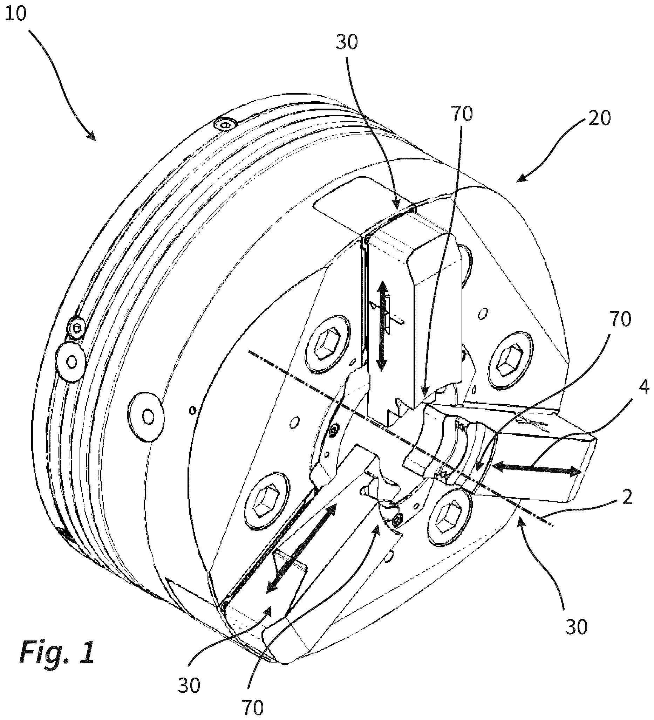

Fig. 1 zeigt ein Spannsystem 10 gemäß der vorliegenden Erfindung. Das Spannsystem 10 gemäß diesem Ausführungsbeispiel ist in Art eines Dreibackenfutter ausgebildet und verfügt über drei radial entlang der Pfeile 4 verlagerbare Spannbacken 30, die über nach innen weisende Spannbereiche 70 verfügen, die in Richtung einer Mittelachse 2 ausgerichtet sind.

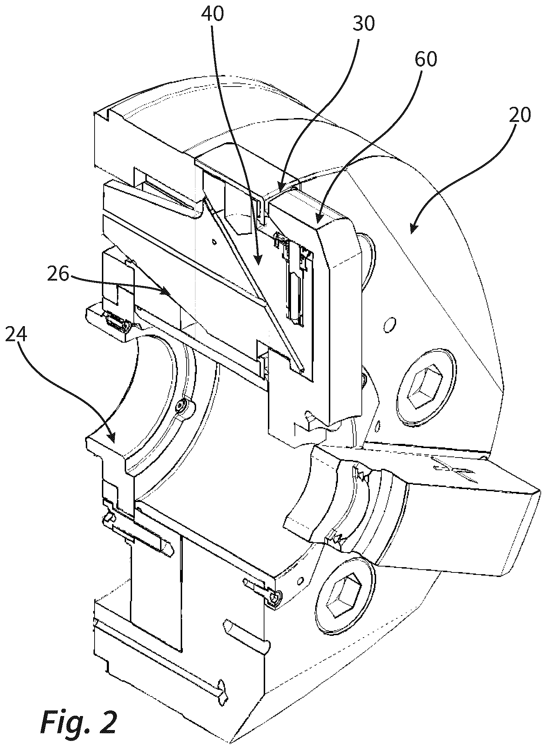

Fig. 2 zeigt das Spannsystem 10 in einer Schnittdarstellung, aus der sich ersehen lässt, dass die Spannbacken 30 jeweils zweigeteilt sind.

Die Spannbacken 30 verfügen über eine Grundbacke 40, die im Zuge der Verwendung des Spannsystems 10 stets an einer Basis 20 des Spannsystems verbleiben und die mittels eines gemeinsamen Betätigungsgliedes 24 und einem Keilgetriebe 26 radial verlagerbar sind.

Die Spannbacken 30 verfügen weiterhin jeweils über eine Aufsatzbacke 60, die bestimmungsgemäß einfach und automatisiert austauschbar ist. Die Aufsatzbacken 60 stellen die Spannbereiche 70 zur Verfügung, die bestimmungsgemäß unmittelbar mit dem Werkstück in Kontakt gelangen, wenn dieses eingespannt wird. Durch Austausch der Aufsatzbacken 60 wird auch der Spannbereich 70 ausgetauscht. Ein Austausch kann verschließbedingt erfolgen oder um eine Aufsatzbacke 60 zu nutzen, die hinsichtlich ihrer Geometrie oder ihres Materials besonders gut an das zu bearbeitende Werkstück angepasst ist.

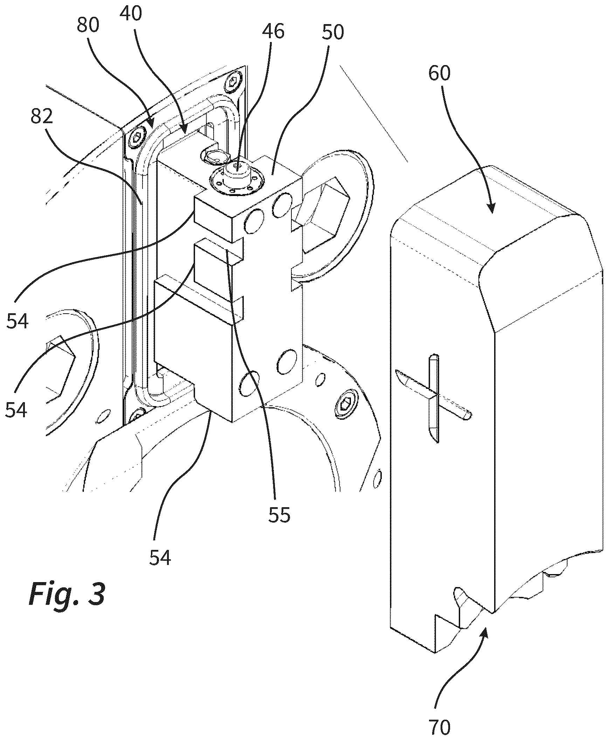

Fig. 3 zeigt in vergrößerter Darstellung eine Spannbacke 30, wobei die Aufsatzbacke 60 von der Grundbacke abgenommen ist.

Es ist zu ersehen, dass die Grundbacke 40 über einen Tragsockel 50 verfügt, der sich durch eine Aussparung in einer Dichtung 80 nach außen erstreckt. Der Tragsockel 50 stellt jenen Teil der Grundbacke 40 dar, an der die Ankopplung der Aufsatzbacke 60 erfolgt. Die Grundbacke weist also einen exponierten Fortsatz auf, der zur Übertragung der Kräfte von der Aufsatzbacke 60 auf die Grundbacke 40 dient. Ausnehmungen in der Grundbacke 40, in denen sich Späne sammeln können, sind dagegen nicht vorhanden.

Zum Zwecke der Befestigung der Aufsatzbacke 60 verfügt der Tragsockel 50 über eine besondere Geometrie. Er weist verschiedene in Art von Überhängen realisierte Haltekonturen 54 auf. Ein Überhang ist bezogen auf Fig. 3 unten am Tragsockel 50 vorgesehen. Weitere kleinere Überhänge sind beidseitig seitlich am Tragsockel 50 vorgesehen und durch Nuten 55 voneinander getrennt.

An der in Fig. 3 nach oben weisenden Seite des Tragsockels ist eine Bohrung 56 vorgesehen, in die ein nach außen federbelasteter Stift als Halteelement 46 eingesetzt ist.

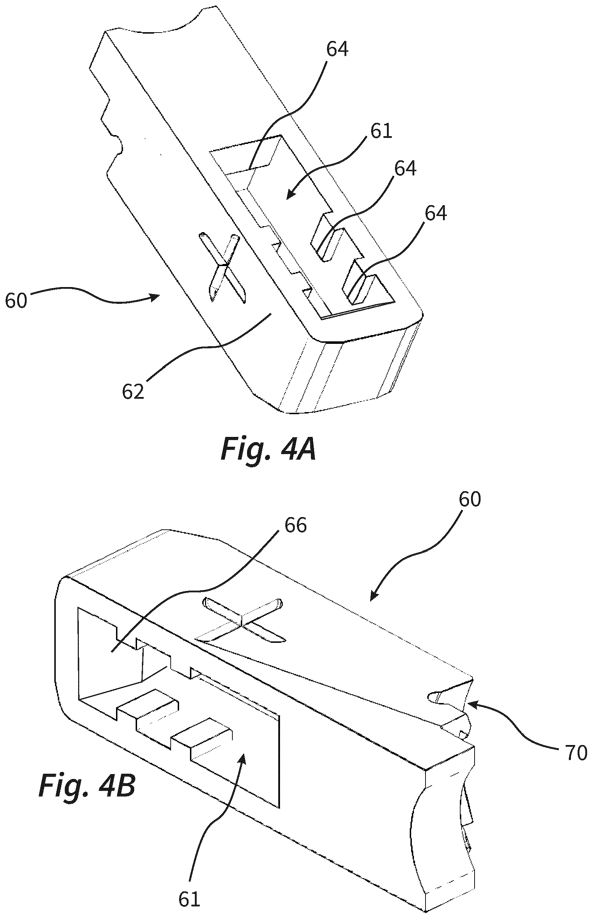

Fig 4A und 4B verdeutlichen den Aufbau der Aufsatzbacken 60. Es ist zu erkennen, dass an der der Grundbacke 40 zugewandten Seite eine Ausnehmung 61 in der Aufsatzbacke 60 vorgesehen ist, die umfänglich durch eine Schürze 62 umgeben ist. In der Ausnehmung 61 sind korrespondierend zu den Haltekonturen 54 am Tragsockel 50 Haltekonturen 64 vorgesehen. Die Haltekonturen 54, 64sind derart aufeinander abgestimmt, dass die Aufsatzbacke 60 in einer definierten Radialstellung relativ zur Grundbacke 40 geradlinig auf den Tragsockel 50 aufgeschoben werden kann und durch eine dann folgende relative Radialbewegung an diesem verriegelbar sind. Dies wird im Weiteren noch erläutert.

Die Aufsatzbacke verfügt über eine Anlaufschräge 66, deren Bedeutung im weiteren noch erklärt wird.

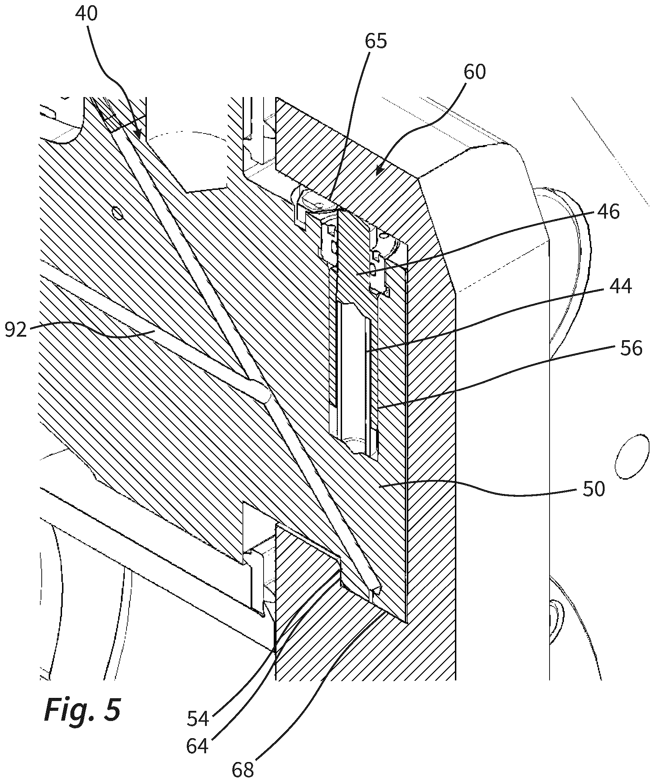

Fig. 5 zeigt eine Spannbacke 30 nochmals in geschnittener Darstellung bei aufgesetzter Aufsatzbacke 60. Es ist zu ersehen, dass die Haltekonturen 54, 64 aneinander anliegen und ein rein axiales Abziehen der Aufsatzbacke 60 somit unterbinden. In ähnlicher Weise sind auch die nicht in der Schnittebene der Fig. 5 angeordneten seitlichen Haltekonturen 54, 64 im Eingriff miteinander.

Weiterhin ist in Fig. 5 zu ersehen, dass das stiftförmige Halteelement 46 durch die Kraft der Federeinrichtung 44 nach außen gedrückt wird und dadurch gegen eine Haltefläche 65 an der Innenseite des Mantels der Aufsatzbacke drückt.

Die Aufsatzbacke 60 wird hierdurch relativ zur Grundbacke 40 und dem Tragsockel 50 radial nach außen gedrückt. Begrenzt wird dies durch eine gegenüberliegend an der Aufsatzbacke 60 innen vorgesehene Schließfläche 68. Diese Schließfläche liegt einer Außenseite des Tragsockels 50 gegenüber, an der ein Druckkanal 92 mündet.

Der Druckkanal 92 ist in nicht näher dargestellter Weise an einer Druckquelle und einer Messeinrichtung angeschlossen. Wird Gas, insbesondere Luft, durch den Druckkanal 92 zugeführt, so erlaubt dies eine Prüfung, ob die Schließfläche 68 den Druckkanal verschließt oder hier Gas entweichen kann. Sofern sich der erwartete Staudruck im Druckkanal 92 einstellt bzw. einen Volumenstrom unterhalb einer akzeptablen Grenze liegt, kann hieraus geschlossen werden, dass zwischen der Schließfläche 68 und dem Tragsockel 50 kein relevanter Spalt verbleibt und die Aufsatzbacke sich somit in ihrer Sollposition relativ zur Grundbacke 40 befindet. Wird dagegen der erwartete Staudruck nicht erreicht oder wird ein zu hoher Volumenstrom erfasst, so ist dies ein Indikator dafür, dass Späne oder anderweitige Verunreinigungen verhindern, dass die Aufsatzbacke 60 ihre Sollposition einnimmt.

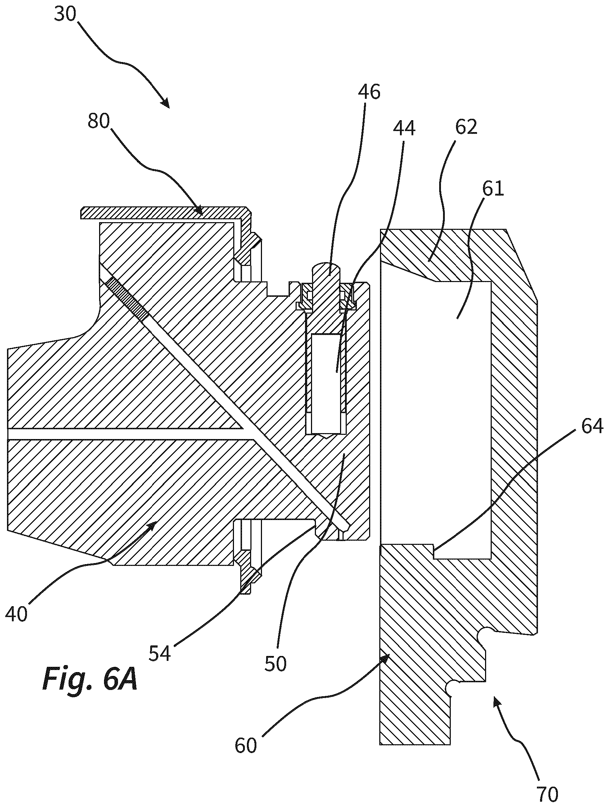

Die Fig. 6A bis 6E verdeutlichen anhand einer schematischen Schnittdarstellung der für die Kopplung wesentlichen Komponenten des Spannsystems 10 das Ankoppeln einer Aufsatzbacke 60.

Fig. 6A zeigt den getrennten Zustand der Spannbacke 30. Auf der Grundbacke 40 und ihrem Tragsockel 50 ist noch keine Aufsatzbacke 60 aufgesetzt. Die in der Fig. 6A dargestellte Aufsatzbacke 60 wird mittels eines Zuführungsgeräts zugeführt, insbesondere mittels eines Roboters oder mittels eines fest an der Bearbeitungsmaschine vorgesehenen Zuführgeräts. Die Aufsatzbacke 60 ist üblicherweise zuvor einem Magazin von Aufsatzbacken entnommen worden. Für den vorliegenden Fall erfolgt die Zuführung mittels eines Roboters, der in nicht dargestellter Weise die Aufsatzbacke 60 führt.

Wie Fig. 6A zeigt, befinden sich die Aufsatzbacke 60 und die Grundbacke 40 bereits vorder Kopplung in ihrer jeweils finalen Ausrichtung. Das Aufsetzen der Aufsatzbacke kann allein über Linearverlagerungen der Aufsatzbacke 60 erfolgen.

Das Aufsetzen beginnt mit einer Relativstellung, in der die Haltekonturen 54, 64 am Tragsockel 50 und an der Aufsatzbacke 60 nicht miteinander fluchten und daher kollisionsfrei aneinander vorbeigeführt werden können.

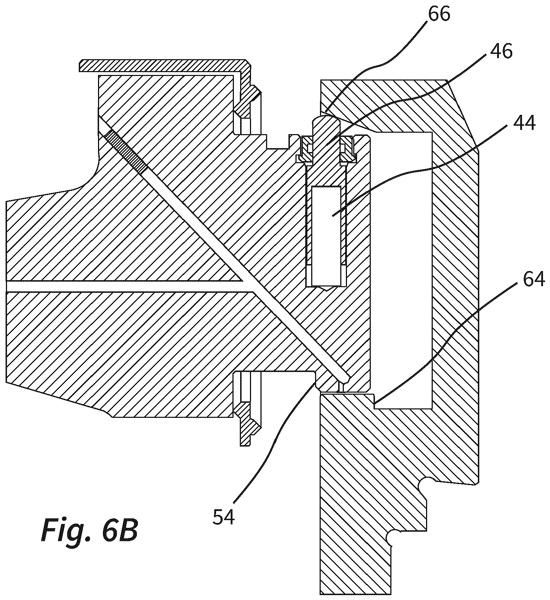

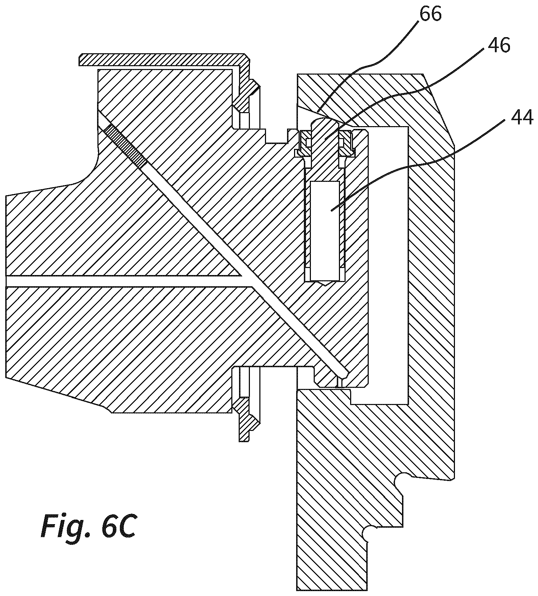

Ausgehend von der Relativstellung der Fig. 6A wird die Aufsatzbacke auf den Tragsockel 50 aufgeschoben, so dass der Tragsockel 50 in die Ausnehmung 61 einfährt. In der Stellung der Fig. 6B gelangt dabei eine Anlaufschräge 66 an der Innenseite der Aufsatzbacke 60 in Kontakt mit dem distalen Ende des stiftförmigen Halteelements 46 und drückt dieses bei fortgesetzter Bewegung gegen die Kraft der Federeinrichtung 44 ein. Fig. 6C verdeutlicht dies.

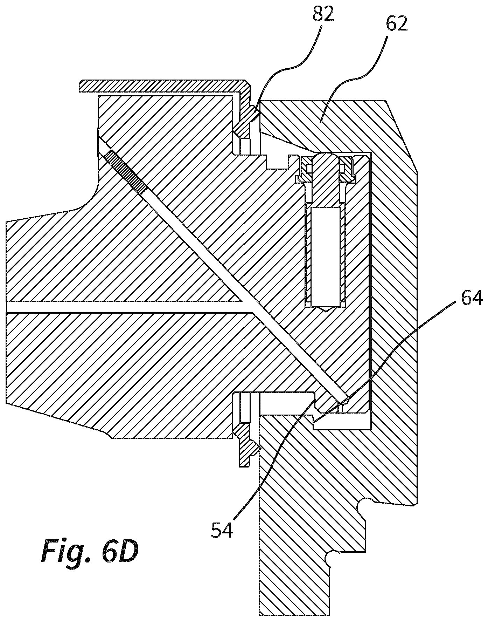

Die axiale Zustellbewegung endet in der Relativstellung der Fig. 6D. Das Halteelement 46 ist nun vollständig in den Tragsockel 50 eingedrückt und die Haltekonturen 54, 64 sind ebenso wie die weiteren seitlichen Haltekonturen 54, 64, die in den Fig. 6A bis 6E nicht zu sehen sind, jeweils aneinander vorbeigeführt.

Weiterhin ist die Schürze 62 der Aufsatzbacke in dieser Phase in Kontakt mit einer Dichtlippe 82 der Dichtung 80 gelangt, so dass der Tragsockel 50 und die Ausnehmung 61 der Aufsatzbacke 60 ab diesem Augenblick gegenüber der Umgebung isoliert sind und die Gefahr eines Eindringens von Spänen oder Verunreinigungen nun gering ist.

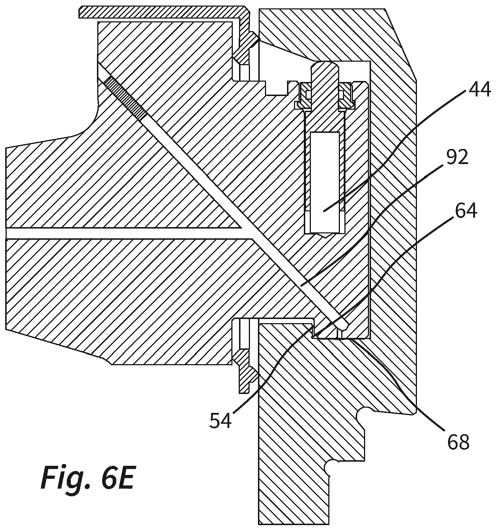

Es kann nun die abschließende Relativbewegung der Aufsatzbacke 60 relativ zur Grundbacke 40 erfolgen, im Rahmen derer die Haltekonturen 54, 64 in Eingriff miteinander gelangen. Fig. 6E verdeutlicht dies. Unterstützt von der Federeinrichtung 44 verlagert der handhabende Roboter die Aufsatzbacke 60 bezogen auf Fig. 6E relativ zur Grundbacke 40 nach oben und bewirkt dadurch die Überführung der Haltekonturen 54, 64 in ihre verriegelnde Stellung. Gleichzeitig wird die Schließfläche 68 der Aufsatzbacke 60 gegen eine untere Seitenfläche der Tragsockels 50 verschoben und verschließt dort den Druckkanal 92. Dass der Druckkanal 92 in der gewünschten Weise verschlossen ist und keine Verunreinigungen oder Späne eine Anlage der Schließfläche am Tragsockel verhindern, gewährleistet, dass die Aufsatzbacke 60 sich in ihrer Sollposition befindet.

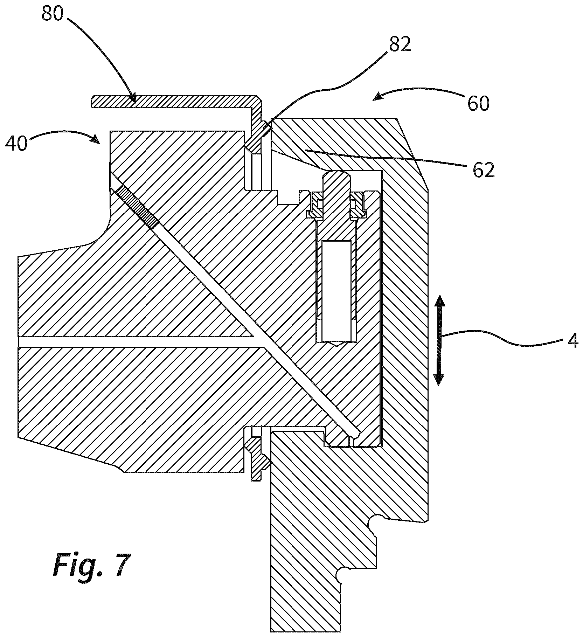

Fig. 7 zeigt, dass die Spannbacke 30, bestehend aus den nun in fester Relativstellung befindlichen Backenteilen der Grundbacke 40 und der Aufsatzbacke 60 in Radialrichtung 4 gegenüber der Basis 20 verlagerbar sind. Die Dichtung 80 ist ebenfalls an der Basis 20 vorgesehen, so dass die Bewegung der Spannbacken 30 radial nach innen und radial nach außen eine Relativbewegung gegenüber der Dichtung darstellen. Die Dichtlippe 82 der Dichtung 80 ist an eine Stirnseite der Schürze 62 derart angepasst, dass die Dichtlippe 82 ungeachtet der Position der Spannbacke 30 umlaufend an der Stirnseite anliegt.

## Patentansprüche

1. Spannsystem (10) zum Einspannen von Werkstücken mit den folgenden Merkmalen:
a. das Spannsystem (10) verfügt über eine Mehrzahl von Spannbacken (30), vorzugsweise mindestens drei Spannbacken (30), die gegeneinander und gegenüber einer Basis (20) des Spannsystems radial verlagerbar sind, und
b. die Spannbacken (30) verfügen jeweils über eine Grundbacke (40), die gegenüber der Basis (20) verlagerbar ist, sowie über eine auf der Grund backe (40) aufgesetzte und automatisiert wechselbare Aufsatzbacke (60), an deren Außenseite ein Spannbereich (70) zur Anlage an einem zu spannenden Werkstück vorgesehen ist,
**gekennzeichnet durch** das folgende weitere Merkmal:
c. die Grundbacke (40) weist einen Tragsockel (50) zum Aufsetzen der Aufsatzbacke (60) auf, wobei die Aufsatzbacke (60) den Tragsockel (50) umfänglich umgibt.

2. Spannsystem (10) nach Anspruch 1 mit dem folgenden weiteren Merkmal:
a. der Tragsockel (50) und die Aufsatzbacke (60) weisen zusammenwirkende Haltekonturen (54, 64) auf,
vorzugsweise mit folgendem zusätzlichen Merkmal:
b. die Haltekonturen (54, 64) sind vorzugsweise derart ausgebildet, dass sie in einer Radialrelativstellung von Grundbacke (40) und Aufsatzbacke (60) ein lineares Aufschieben der Aufsatzbacke in Axialrichtung gestatten und ausgehend von einer solchen Relativstellung radial gegeneinander verlagerbar sind, um in eine hinterschneidende Relativstellung zu gelangen.

3. Spannsystem (10) nach Anspruch 1 oder 2 mit dem folgenden weiteren Merkmal:
a. die Grundbacke (40) und die Aufsatzbacke (60) sind derart aufeinander angepasst, dass sie allein durch eine Relativbewegung der Aufsatzbacke (60) relativ zur Grundbacke (40) miteinander gekoppelt und voneinander gelöst werden können.

4. Spannsystem (10) nach Anspruch 1 oder 2 mit dem folgenden weiteren Merkmal:
a. die Grundbacke (40) und die Aufsatzbacke (60) sind durch reine Linearbewegungen miteinander koppelbar und voneinander lösbar, vorzugsweise durch zwei aufeinanderfolgende lineare Relativbewegungen.

5. Spannsystem (10) nach einem der vorstehenden Ansprüche mit den folgenden weiteren Merkmalen:
a. die Aufsatzbacke (60) weist eine umlaufende Schürze (62) auf, und
b. es ist eine Dichtung (80) vorgesehen, die bei auf der Grundbacke (40) aufgesetzter Aufsatzbacke (60) einen Spalt zwischen der Schürze (62) und der Grundbacke (40) oder der Basis (20) schließt,
vorzugsweise mit mindestens einem der folgenden zusätzlichen Merkmale:
c. die Dichtung (80) ist als elastische Dichtung (80) ausgebildet, und/oder
d. die Dichtung (80) ist an der Basis (20) vorgesehen.

6. Spannsystem (10) nach einem der vorstehenden Ansprüche mit dem folgenden weiteren Merkmal:
a. die Grundbacke (40) verfügt über ein relativ zum Tragsockel (50) verlagerbares Halteelement (46), mittels dessen die Aufsatzbacke (60) an der Grundbacke (40) gesichert wird,
vorzugsweise mit dem folgenden zusätzlichen Merkmal:
b. das Halteelement (46) ist beweglich im Tragsockel (50) vorgesehen und ragt an einer Seite aus dem Tragsockel (50) heraus, vorzugsweise im Bereich einer seitlichen Mantelfläche des Tragsockels (50).

7. Spannsystem (10) nach einem der vorstehenden Ansprüche mit dem folgenden weiteren Merkmal:
a. das Halteelement (46) wird durch eine Federeinrichtung (44) in eine exponierte Stellung gedrückt,
vorzugweise mit dem folgenden zusätzlichen Merkmal
b. an einer Innenseite der Aufsatzbacke (60) ist eine Anlaufschräge (66) vorgesehen, mittels derer das Halteelement (46) beim Aufsetzen der Aufsatzbacke (60) gegen die Kraft der Federeinrichtung (44) ausgelenkt wird.

8. Spannsystem (10) zum Einspannen von Werkstücken mit den folgenden Merkmalen:
a. das Spannsystem (10) verfügt über eine Mehrzahl von verlagerbaren Spannbacken (30), vorzugsweise mindestens drei Spannbacken (30), die gegeneinander und gegenüber einer Basis (20) des Spannsystems radial verlagerbar sind, und
b. die Spannbacken (30) verfügen jeweils über eine Grundbacke (40), die gegenüber der Basis (20) verlagerbar ist, sowie über eine auf der Grund backe (40) aufgesetzte und automatisiert wechselbare Aufsatzbacke (60), an deren Außenseite ein Spannbereich (70) zur Anlage an einem zu spannenden Werkstück vorgesehen ist,
**gekennzeichnet durch** die folgenden weiteren Merkmale:
c. das Spannsystem (10) verfügt über ein pneumatisches Prüfsystem (90), um die korrekte Anlage der Aufsatzbacke (60) an der Grundbacke (40) zu prüfen, und
d. das pneumatische Prüfsystem (90) weist einen Druckkanal (92) in der Grundbacke (40) auf, der im Zuge des Aufsetzens der Aufsatzbacke (60) mit einem Überdruck oder Unterdruck beaufschlagbar ist und der endseitig bei korrekter Anlage durch eine Schließfläche (68) der Aufsatzbacke (60) verschlossen ist.

9. Spannsystem (10) nach Anspruch 8 mit dem folgenden weiteren Merkmal:
a. das Spannsystem (10) ist nach einem der Ansprüche 1 bis 7 ausgebildet.

10. Spannsystem (10) nach Anspruch 8 oder 9 mit dem folgenden weiteren Merkmal:
a. die Schließfläche (68) der Aufsatzbacke (60) und der Spannbereich (70) der Aufsatzbacke (60) sind in zueinander entgegengesetzter Richtung ausgerichtet.

11. Spannsystem (10) nach einem der Ansprüche 8 bis 10 mit den folgenden weiteren Merkmalen:
a. das Spannsystem (10) verfügt über ein gegenüber der Grundbacke (40) bewegliches Halteelement (46) zur Sicherung der Aufsatzbacke (60) durch Andrücken an einer Haltefläche (65) der Aufsatzbacke, und
b. die Schließfläche (68) der Aufsatzbacke (60) und die Haltefläche (65) der Aufsatzbacke (60) sind in zueinander entgegengesetzter Richtung ausgerichtet.

12. Spannsystem (10) nach einem der Ansprüche 8 bis 11 mit den folgenden weiteren Merkmalen:
a. die Grundbacke (40) weist einen Tragsockel (50) zum Aufsetzen der Aufsatzbacke (60) auf, und
b. der Druckkanal (92) erstreckt sich durch den Tragsockel (50),
vorzugsweise mit dem folgenden zusätzlichen Merkmal:
c. der Druckkanal (92) mündet an einer seitlichen Mantelfläche des Tragsockels (50).

13. Spannsystem (10) nach einem der vorstehenden Ansprüche mit dem folgenden weiteren Merkmal:
a. das Spannsystem (10) verfügt über ein gemeinsames Betätigungsglied (24), welches durch Verlagerung in einer Axialrichtung die Grundbacken (40) gemeinsam radial gegeneinander verlagert,
vorzugsweise mit dem folgenden zusätzlichen Merkmal:
b. die radiale Verlagerung erfolgt mittels eines Keilgetriebes (26).

14. Spannsystem (10) nach einem der vorstehenden Ansprüche mit dem folgenden weiteren Merkmal:
a. das Spannsystem (10) ist als Dreibackenfutter oder Vierbackenfutter ausgebildet.
